# EUROPEAN PATENT SPECIFICATION

(11) **EP 2 568 671 B1**
(45) Date of publication and mention of the grant of the patent: **20.05.2020**
(21) Application number: 11777094.1
(22) Date of filing: 21.01.2011
(51) Int. Cl.: H04L 12/58, H04L 29/06

(54) **METHOD FOR COMPOSING INFORMATION, CORRESPONDING TERMINAL AND INSTANT MESSAGING SYSTEM**
VERFAHREN ZUR ZUSAMMENSTELLUNG VON INFORMATIONEN, ENTSPRECHENDES ENDGERÄT UND SOFORTNACHRICHTENSYSTEM
PROCÉDÉ DE COMPOSITION D'INFORMATIONS, TERMINAL CORRESPONDANT ET SYSTÈME DE MESSAGERIE INSTANTANÉE

(30) Priority: 05.05.2010 CN 201010168003
(43) Date of publication of application: 13.03.2013
(73) Proprietor: Tencent Technology (Shenzhen) Company Limited, Guangdong Province (CN)
(72) Inventor: LUAN, Tao, Shenzhen City 518044 Guangdong Province (CN)
(74) Representative: Katérle, Axel
(86) International application number: PCT/CN2011/070465
(87) International publication number: WO 2011/137673

(56) References cited:
- WO-A2-01/37123
- CN-A- 101 136 876
- CN-A- 101 299 731
- CN-A- 101 540 740
- CN-A- 101 645 855
- US-A1- 2004 078 595
- US-A1- 2010 064 018

## Description

### Field of the Invention

The present invention relates to communication technology field, and more particularly, to an information combining method, terminal and Instant Messaging (IM) system.

### Background of the Invention

Developing to nowadays, IM technology has been accepted by the majority of users. It is widely used not only in usual recreation, but also in daily work, and has become an essential software tool of the users. Therefore, the users have a high demand for ease of use, stability, security, and the like, of IM software.

In the operational phase of the IM software, in order to achieve a more flexible operational purpose, bring better experience to the users, a server inevitably needs to dynamically issue some prompt information, such as tips, to a terminal. In many cases, Tips issued to the terminal by the server need to include some information stored in the terminal (namely, terminal information). At present, the process for the server to issue the tips includes the following. The server obtains terminal information stored in the terminal from the terminal via a network protocol, then generates tips according to the terminal information, and issues the tips to the terminal.

The document US 2004/078595A1 discloses systems for instant messaging private tags preferably comprise a parser for parsing an instant message for sensitive data and an encryption engine for encrypting the sensitive data. A modified uuencoder is also preferably included for converting the encrypted sensitive data into a data stream that complies with an XML format.

The document US 2010/064018A1 discloses a method for processing IM information. The method includes: obtaining hyperlink information contained in IM information; obtaining original content information of a webpage corresponding to the hyperlink information; generating content abstract information of the webpage according to the original content information of the webpage; and displaying the content abstract information of the webpage.

The document WO0137123A2 discloses an electronic mail (e-mail) system to deliver dynamic and multi-cource e-mail content over the Internet. Content for portions of an e-mail message are composed incorporating dynamic and multi-source e-mail elements using a composition application accessible via the Internet. The composition application translates the e-mail portion compositions into e-mail content generation instructions that are stored in a location accessible to an e-mail content server. E-mail content tags are created that adapt an e-mail client to request e-mail content from the e-mail content server via the Internet. The e-mail content tag is inserted into an e-mail message to be sent to the e-mail client. The e-mail client uses the e-mail content tag to request an e-mail content from the e-mail content server. The e-mail content server generates the e-mail content based on the e-mail content generation instructions and sends the e-mail content to the requesting e-mail client for display within the body of the e-mail message.

In the process of achieving the present invention, the inventor finds that above process have the following obvious defects.

In the aspect of network bandwidth, the protocol interaction during the server obtaining terminal information in the exiting process consumes network bandwidth. As to server implementation, it is necessary for the server to consume resources to achieve various logics for obtaining terminal information and generating tips, thus it is complex to be implemented and has a large cost.

### Summary of the Invention

Embodiments of the present invention provide a information combining method, a terminal and an IM system, which can simplify the process for a server to issue tips to a terminal, thus enhance the efficiency of the server, save resources, and promote the enrichment of content of tips, improve user experience.

The information combining method provided by embodiments of the present invention includes:
receiving, by a terminal, original prompt information, wherein a portion corresponding to terminal information in the original prompt information is referred to and replaced by a tag; the tag refers to and replaces terminal information of one terminal;
parsing, by the terminal, the tag and searching terminal information stored in the terminal or a second server for corresponding terminal information to which the tag refers; replacing by the termnial the tag in the original prompt information with corresponding terminal information, and generating final prompt information;
displaying, by the terminal, the final prompt information.

Preferably, wherein the tag includes a tag name and a tag parameter, the tag name and the tag parameter jointly determine the corresponding terminal information to which the tag refers;
the tag name indicates a type of the terminal information to which the tag refers; the tag parameter indicates specific terminal information.

Preferably, wherein searching terminal information stored in the terminal or the second server for corresponding terminal information to which the tag refers includes:
searching, by the terminal, terminal information stored in the terminal itself or that stored in a second server for terminal information to which the tag refers according to the tag name and the tag parameter of the tag.

Preferably, wherein the terminal is a terminal in an Instant Messaging system; the first server is a server in the Instant Messaging system.

Embodiments of the present invention also provide a terminal for implementing above mentioned method, the terminal includes: an information receiving module, a parsing and combining module and an information displaying module; wherein
the information receiving module is adapted to receive original prompt information, wherein a portion corresponding to terminal information in the original prompt information is referred to and replaced by a tag; the tag refers to and replaces terminal information of one terminal;
the parsing and combining module is adapted to parse the tag, search terminal information stored in the terminal or the second server for corresponding terminal information to which the tag refers; replace the tag in the original prompt information with corresponding terminal information, and generate final prompt information;
the information displaying module is adapted to display the final prompt information generated by the parsing and combining module.

Preferably, the terminal further includes:
a data storing module, which is to store terminal information.

Preferably, wherein the tag includes a tag name and a tag parameter; the tag name and the tag parameter jointly determine terminal information to which the tag refers;
the tag name indicates a type of terminal information to which the tag refers; the tag parameter indicates specific terminal information.

Preferably, wherein the parsing and combining module includes:
a parsing unit, to parse the tag;
a searching unit, to search the data storing module or a second server for terminal information to which the tag refers;
a combining unit, to replace the tag in the original prompt information with the terminal information searched out by the searching unit, and generate the final prompt information.

Correspondingly, embodiments of the present invention further provide an IM system for implementing above mentioned method, the system includes: a first server and a terminal mentioned above;
the first server is adapted to transmit original prompt information to the terminal, wherein a portion corresponding to terminal information in the original prompt information is referred to and replaced by a tag; the tag refers to and replaces terminal information of one terminal;
a second server, adapted to store terminal information;
the terminal adapted to obtain corresponding terminal information from terminal information stored in the terminal, or from the second server, and replaces the tag in the original prompt information with the obtained terminal information.

Embodiments of the present invention further provide a computer program product, comprising computer program code, which, when executed by a computer unit, will cause the computer unit to perform the method mentioned above.

Embodiments of the present invention further provide a computer readable medium, wherein computer program code mentioned above is stored on the computer readable medium.

The information combining method, terminal and IM system provided by the present invention achieve the tips' generation in terminal, thereby simplifying the process for the server to issue tips to the terminal, and then enhancing the efficiency of the server, saving resources. In addition, it is conductive to add more terminal information in tips, and as a result the content of tips is richer, the usage is more intimate, and the user experience is enhanced.

### Brief Description of Drawings

Exemplary embodiment of the present invention will be described in detail hereinafter with reference to accompanying drawings, so as to make above mentioned and other technical solutions and advantages of the present invention clearer to one skilled in the art.
Figure 1 is a flowchart illustrating an information combining method according to a first embodiment of the present invention.
Figure 2 is a flowchart illustrating an information combining method according to a second embodiment of the present invention.
Figure 3 is a schematic diagram illustrating an IM system according to an embodiment of the present invention.
Figure 4 is a schematic diagram illustrating a terminal according to a first embodiment of the present invention.
Figure 5 is a schematic diagram illustrating a terminal according to a second embodiment of the present invention.

### Detailed Description of the Invention

Information combining method, terminal and IM system provided by embodiments of the present invention generate the tips in terminal side.

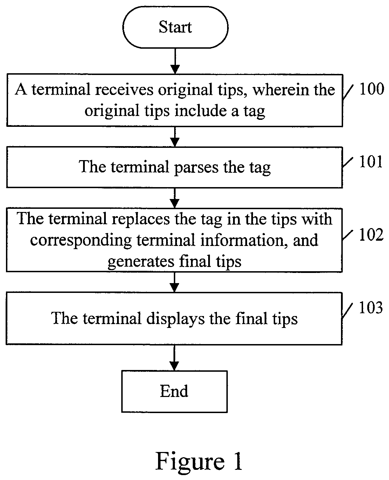

Figure 1 is a flowchart illustrating an information combining method according to a first embodiment of the present invention. As shown in Figure 1, the method includes the following processes.

In block 100, a terminal receives original tips, wherein the original tips include a tag.

In block 101, the terminal parses the tag.

In block 102, the terminal replaces the tag in the tips with corresponding terminal information, and generates final tips.

In block 103, the terminal displays the final tips.

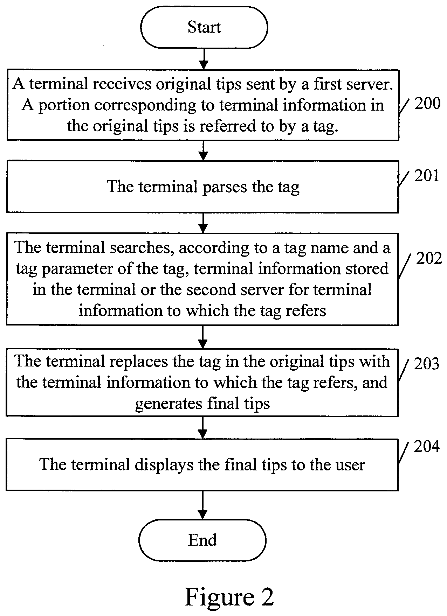

Figure 2 is a flowchart illustrating an information combining method according to a second embodiment of the present invention. In the present embodiment, the information combining method will be described in more detail. As shown in Figure 2, the method includes the following processes.

In block 200, a terminal receives original tips sent by a first server. A portion corresponding to terminal information in the original tips is referred to by a tag.

More specifically, the first server may actively transmit the original tips to the terminal, or the first server may transmit the original tips to the terminal after being triggered by an operation of the terminal. For instance, an IM user whose number is 1234567 sends an email to the terminal through the first server. In this case, the first server will actively transmit tips to the terminal to prompt a user of the terminal to receive the email. In the present embodiment, suppose the original tips are "< Terminal name >, <Sender name >sends you an email, please check and confirm", and the actual terminal name is "ZhangSan", the actual sender name is "LiSi".

According to the existing processing manner, the first server needs to obtain terminal information, namely terminal name "ZhangSan" and sender name "LiSi", required in tips from the terminal first, next combines obtained terminal information and original tips, then generates complete final tips "ZhangSan, LiSi sends you an email, please check and confirm" and transmits the final tips to the terminal.

As can be seen from above, the first server obtains the terminal information from the terminal first, and transmits the terminal information to the terminal later, which is repeated, and wastes network bandwidth and resources of the first server. In order to avoid the above problem, in present embodiment, when transmitting the tips, the first server does not need to obtain the terminal information, just utilize a tag to refer to the portion corresponding to terminal information in the tips. In the present embodiment, the original tips transmitted by the first server to the terminal are "<Tag 1>, <Tag 2> sends you an email, please check and confirm".

In block 201, the terminal parses the tag.

More specifically, the tag includes at least tow parts, namely, tag name and tag parameter. The tag name and the tag parameter may jointly determine terminal information to which the tag refers. The tag name indicates a type of terminal information to which the tag refers. The tag parameter indicates the specific terminal information of the type. Certainly, when data volume is too big and data classification is finer, one tag parameter may not be sufficient to determine terminal information. In this case, it is possible to introduce multiple parameters to uniquely determine the terminal information to which the tag refers.

In practice, terminal information may be stored in a terminal or a second server. Terminal information stored in the terminal includes various information related to the terminal itself as well as contacts or buddies of the terminal. The second server is adapted to store terminal information of all terminals in the network. Terminal information stored in the second server includes all information related to terminals in the network.

The terminal information stored in the terminal, for example, is shown in table 1.

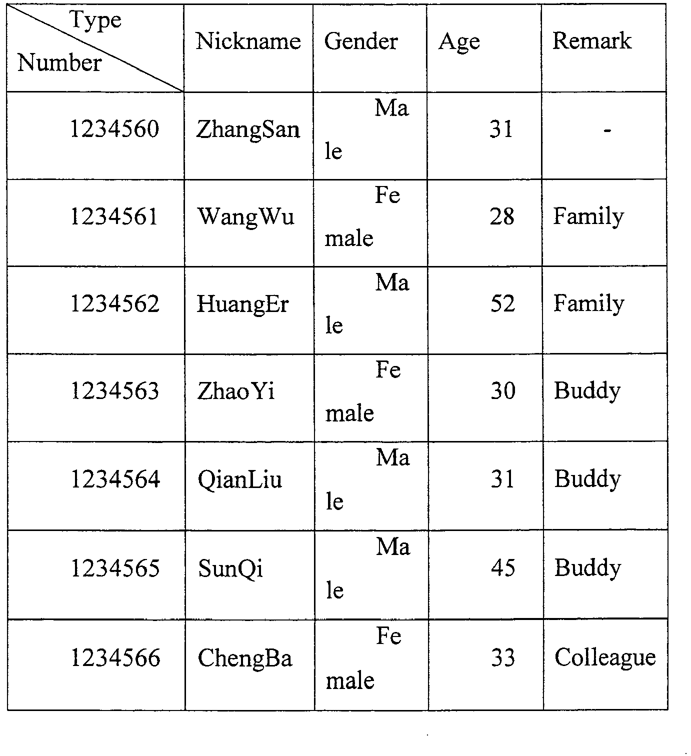

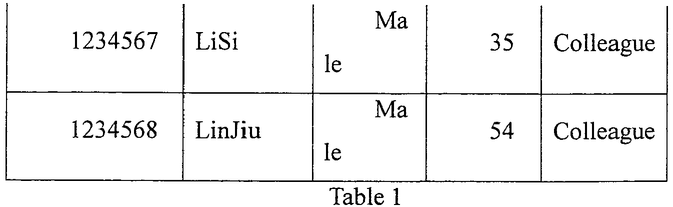

In the present embodiment, the tag name is the type to which the terminal information belongs, and the tag parameter is a number of the terminal itself or a contact of the terminal, so the tag name and the tag parameter may uniquely determine the terminal information. For instance, in above mentioned example of the present embodiment, <Tag 1> actually refers to "ZhangSan", so specific content of the <Tag 1> is <Nickname, 1234560>. <Tag 2> actually refers to "LiSi", so specific content of the <Tag 2> is <Nickname, 1234567>.

Furthermore, the tag in original tips in embodiments of the present invention starts with "<" and ends with ">". The tag name and parameter name are case-insensitive. The tag does not support nesting. In order to avoid the problem that the terminal can not recognize the tag when original tips contains symbols "<" and ">", it is possible to define an escape character, for instance, "%" may be defined as an escape character. That is to say, if the body of the original tips contains "<", ">" or "%", the symbols "<", ">" or "%"in the body of the original tips are expressed as "%<", "%>" or "%%" in original tips transmitted by the first server.

In block 202, the terminal searches, according to a tag name and a tag parameter of the tag, terminal information stored in the terminal or the second server for terminal information to which the tag refers.

More specifically, the <Tag 1> in the embodiment is taken as an example, the terminal may determine a type of terminal information to which the <Tag 1> refers first according to the tag name "Nickname", and then determine that specific terminal information to which the <Tag 1> refers is "ZhangSan" according to the tag parameter "1234560". Similarly, the terminal may determine terminal information to which the <Tag 2> refers is "LiSi" according to the tag name and tag parameter of the <Tag 2>.

Above tag format and corresponding terminal information searching manner may be used in the situation that the amount of terminal data is large and storage formats of various types of terminal data are inconsistent, and has wide adaptability and better portability.

Preferably, the terminal in the present embodiment includes: a mobile terminal, a client, a personal computer (PC) terminal. Each type of terminal may be limited by its own hardware, so that it does not store complete terminal information in local, or even stores no terminal information in local. When the terminal stores no terminal information or fails to search out corresponding terminal information from terminal information stored in the terminal, the terminal may obtain corresponding terminal information from the second server.

In block 203, the terminal replaces the tag in the original tips with the terminal information to which the tag refers, and generates final tips.

More specifically, in the embodiment, the terminal has determined that <Tag 1> refers to "ZhangSan", <Tag 2> refers to "LiSi", then the terminal replaces <Tag 1> and <Tag 2> in the original tips with determined terminal information, and generates the final tips. That is, the final tips are "ZhangSan, LiSi sends you an email, please check and confirm".

In block 204, the terminal displays the final tips to the user.

It should be noted that, in the present embodiment, the terminal may be a terminal in an IM system, and the first server may be a server in the IM system.

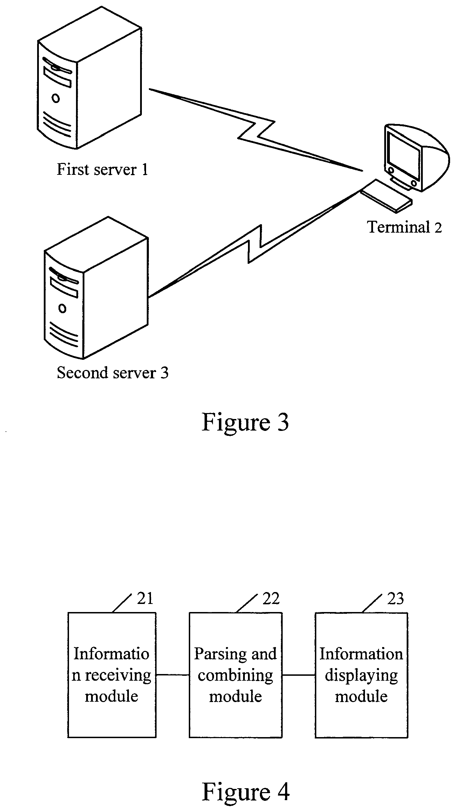

Figure 3 is a schematic diagram illustrating an IM system according to an embodiment of the present invention. As shown in figure 3, the system includes a first server 1 and a terminal 2.

The first server 1 is configured to transmit original tips, and a portion corresponding to terminal information in the original tips is referred by a tag.

The terminal 2 is configured to receive the original tips transmitted by the first server 1, and parse the tag, replace the tag in the original tips with corresponding terminal information, generate final tips, and display the final tips.

Preferably, the system also includes a second server 3 which is configured to store terminal information, and provide an access interface for the terminal 2. The terminal 2 parses the tag, and obtains corresponding terminal information in local or from the second server 3, and replaces the tag in the original tips with the corresponding terminal information.

Figure 4 is a schematic diagram illustrating a terminal according to a first embodiment of the present invention. As shown in figure 4, the terminal includes an information receiving module 21, a parsing and combining module 22 and an information displaying module 23.

The information receiving module 21 is configured to receive original tips, the original tips includes a tag.

The parsing and combining module 22 is configured to parse the tag, replace the tag in the original tips with corresponding terminal information, and generate final tips.

The information displaying module 23 is configured to display the final tips generated by the parsing and combining module 22.

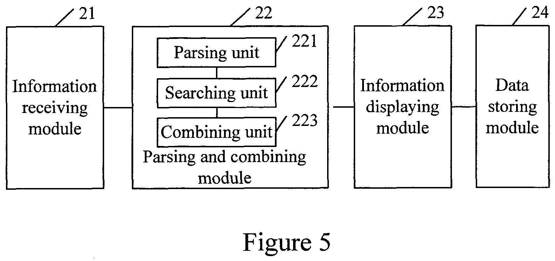

Figure 5 is a schematic diagram illustrating a terminal according to a second embodiment of the present invention. In the present embodiment, function and structure of the terminal will be described in more detail. As shown in Figure 5, the terminal also includes an information receiving module 21, a parsing and combining module 22 and an information displaying module 23. The terminal provided by the present embodiment may further includes a data storing module 24 which is configured to store terminal information, and provide an access interface for other modules of the terminal. The terminal information includes various information related to the terminal, a contact and a buddy of the terminal.

In the present embodiment, the information receiving module 21 is configured to receive original tips, the original tips includes a tag.

More specifically, the first server 1 may actively transmit the original tips to the terminal 2, or the first server 1 may transmit the original tips to the terminal 2 after being triggered by an operation of the terminal 2. For instance, an IM user whose number is 1234567 sends an email to the terminal 2 through the first server 1. In this case, the first server 1 will actively transmit tips to the terminal 2 to prompt a user of the terminal 2 to receive the email. Suppose the original tips are "< Terminal name >, <Sender name >sends you an email, please check and confirm", and the actual terminal name is "ZhangSan", the actual sender name is "LiSi".

According to the existing processing manner, the first server needs to obtain terminal information, namely terminal name "ZhangSan" and sender name "LiSi", required in tips from the terminal first, next combines obtained terminal information and original tips, then generates complete final tips "ZhangSan, LiSi sends you an email, please check and confirm" and transmits the final tips to the terminal. The process for the first server to obtain the terminal information is repeated, and wastes network bandwidth and resources of the first server.

In order to avoid the above problem, in present embodiment, the final tips are generated in the terminal 2. When transmitting the tips, the first server 1 does not need to obtain the terminal information, just utilize a tag to refer to the portion corresponding to terminal information in the tips. In the present embodiment, the information receiving module 21 receives the original tips transmitted by the first server 1, and the original tips are "<Tag 1>, <Tag 2> sends you an email, please check and confirm".

The parsing and combining module 22 is configured to parse the tag, replace the tag in the original tips with corresponding terminal information, and generate final tips. More specifically, the parsing and combining module 22 may includes a parsing unit 221, a searching unit 222 and a combining unit 223.

The parsing unit 221 is configured to parsing the tag.

More specifically, the tag includes at least tow parts, namely, tag name and tag parameter. The tag name and the tag parameter may jointly determine terminal information to which the tag refers. The tag name indicates a type of terminal information to which the tag refers. The tag parameter indicates the specific terminal information of the type. Certainly, when the amount of data is too large and data classification is finer, one tag parameter may not be sufficient to determine terminal information. In this case, it is possible to introduce multiple parameters to uniquely determine the terminal information to which the tag refers.

In practice, terminal information of all terminals in the network may be stored in a second server. If the terminal includes a data storing module 24, the data storing module 24 usually stores a mass of terminal information, for example, as shown in table 1. In the present embodiment, the tag name is the type to which the terminal information belongs, and the tag parameter is a number of the terminal itself or a contact of the terminal, so the tag name and the tag parameter may uniquely determine the terminal information. For instance, in above mentioned example of the present embodiment, <Tag 1> actually refers to "ZhangSan", so specific content of the <Tag 1> is <Nickname, 1234560>. <Tag 2> actually refers to "LiSi", so specific content of the <Tag 2> is <Nickname, 1234567>.

Furthermore, the tag in original tips in embodiments of the present invention starts with "<" and ends with ">". The tag name and parameter name are case-insensitive. The tag does not support nesting. In order to avoid the problem that the parsing unit 221 can not recognize the tag when original tips contains symbols "<" and ">", it is possible to define an escape character, for instance, "%" may be defined as an escape character. That is to say, if the body of the original tips contains "<", ">" or "%", the symbols "<", ">" or "%"in the body of the original tips are expressed as "%<", "%>" or "%%" in original tips transmitted by the first server.

The searching unit 222 is configured to search the data storing module 24 or the second server 3 for terminal information to which the tag refers according to a tag name and a tag parameter of the tag.

More specifically, the <Tag 1> in the embodiment is taken as an example, the searching unit 222 may determine a type of terminal information to which the <Tag 1> refers first according to the tag name "Nickname", and then determine that specific terminal information to which the <Tag 1> refers is "ZhangSan" according to the tag parameter "1234560". Similarly, the searching unit 222 may determine that terminal information to which the <Tag 2> refers is "LiSi" according to the tag name and tag parameter of the <Tag 2>.

Above tag format and corresponding searching manner of the searching unit 222 may be used in the situation that the amount of terminal data is large and storage formats of various types of terminal data are inconsistent, and has wide adaptability and better portability.

Preferably, the terminal in the present embodiment includes: a mobile terminal, a client, a personal computer (PC) terminal. Each type of terminal is limited by its own hardware, so that it does not store complete terminal information, or even does not include the data storing module 24. When the terminal stores no terminal information or fails to search out corresponding terminal information from terminal information stored in the terminal, the searching unit 222 may obtain corresponding terminal information from the second server.

The combining unit 223 is configured to replace the tag in the original tips with the terminal information searched out by the searching unit 222, and generate final tips.

More specifically, in the embodiment, the searching unit 222 has determined that <Tag 1> refers to "ZhangSan", <Tag 2> refers to "LiSi", then the combining unit 223 replaces <Tag 1> and <Tag 2> in the original tips with determined terminal information, and generates the final tips. That is, the final tips generated by the combining unit 223 are "ZhangSan, LiSi sends you an email, please check and confirm".

The information displaying module 23 is configured to display the final tips generated by the parsing and combining module 22.

It should be noted that, in the present embodiment, the terminal may be a terminal in the IM system.

According to the above description of examples, it can be clearly understood by those skilled in the art that the present invention can be realized by software accompanying with necessary general hardware platforms, or by hardware. Based on this, the essential part of the technical solution of the present invention or the part contributed to the prior art can be in the form of a software product, and the computer software product is stored in a storage medium, such as ROM/RAM, diskette, optical disc, and the like, and includes several codes to make a computer device (such as a handset, a personal computer, a server or a network device) perform the method in embodiments of the present invention.

## Claims

1. An Instant Messaging information combining method, comprising:
receiving, by a terminal, original prompt information, wherein a portion corresponding to terminal information in the original prompt information is referred to and replaced by a tag (100,200); the tag refers to and replaces terminal information of one terminal;
parsing, by the terminal, the tag and searching terminal information stored in the terminal or a second server for corresponding terminal information to which the tag refers;
replacing by the terminal the tag in the original prompt information with the corresponding terminal information, and generating final prompt information (101-102, 201-203); and
displaying, by the terminal, the final prompt information (103,204).

2. The method according to claim 1, wherein the tag comprises a tag name and a tag parameter, the tag name and the tag parameter jointly determine the corresponding terminal information to which the tag refers;
the tag name indicates a type of the terminal information to which the tag refers; the tag parameter indicates specific terminal information.

3. The method according to claim 2, wherein searching terminal information stored in the terminal or the second server for corresponding terminal information to which the tag refers comprises:
searching, by the terminal, terminal information stored in the terminal itself or that stored in a second server for terminal information to which the tag refers according to the tag name and the tag parameter of the tag (202).

4. The method according to any one of claims 1 to 3, wherein the terminal is a terminal in an Instant Messaging system; the first server is a server in the Instant Messaging system.

5. An Instant Messaging terminal, comprising: an information receiving module, a parsing and combining module and an information displaying module; wherein
the information receiving module (21) is adapted to receive original prompt information, wherein a portion corresponding to terminal information in the original prompt information is referred to and replaced by a tag; the tag refers to and replaces terminal information of one terminal;
the parsing and combining module (22) is adapted to parse the tag, search terminal information stored in the terminal or the second server for corresponding terminal information to which the tag refers; replace the tag in the original prompt information with corresponding terminal information, and generate final prompt information;
the information displaying module (23) is adapted to display the final prompt information generated by the parsing and combining module.

6. The terminal according to claim 5, further comprising:
a data storing module (24), which is to store terminal information.

7. The terminal according to claim 5, wherein the tag comprises a tag name and a tag parameter; the tag name and the tag parameter jointly determine terminal information to which the tag refers;
the tag name indicates a type of terminal information to which the tag refers; the tag parameter indicates specific terminal information.

8. The terminal according to claim 7, wherein the parsing and combining module comprises:
a parsing unit (221), to parse the tag;
a searching unit (222), to search the data storing module or a second server for terminal information to which the tag refers;
a combining unit (223), to replace the tag in the original prompt information with the terminal information searched out by the searching unit (222), and generate the final prompt information.

9. An Instant Messaging system, comprising: a first server (1) and a terminal (2) according to any one of claims 5 to 8;
the first server (1) is adapted to transmit original prompt information to the terminal (2), wherein a portion corresponding to terminal information in the original prompt information is referred to and replaced by a tag; the tag refers to and replaces terminal information of one terminal;
a second server (3), adapted to store terminal information;
the terminal (2) adapted to obtain corresponding terminal information from terminal information stored in the terminal (2), or from the second server (3), and replaces the tag in the original prompt information with the obtained terminal information.

10. A computer program product, comprising computer program code, which, when executed by a computer unit, will cause the computer unit to perform all steps of the method according to any one of claims 1 to 4.

11. A computer readable medium, wherein computer program code according to claim 10 is stored on the computer readable medium.

## Patentansprüche

1. Sofortnachrichtenübermittlungs-Informationskombinationsverfahren, umfassend:
Empfangen, durch ein Endgerät, einer ursprünglichen Eingabeaufforderungsinformation, wobei ein Abschnitt, der einer Endgeräteinformation in der ursprünglichen Eingabeaufforderungsinformation entspricht, durch einen Tag (100, 200) referenziert und ersetzt wird; wobei der Tag eine Endgeräteinformation eines Endgeräts referenziert und ersetzt;
Parsen, durch das Endgerät, des Tags und Durchsuchen einer im Endgerät oder einem zweiten Server gespeicherten Endgeräteinformation nach einer entsprechenden Endgeräteinformation, die der Tag referenziert;
Ersetzen, durch das Endgerät, des Tags in der ursprünglichen Eingabeaufforderungsinformation mit der entsprechenden Endgeräteinformation und Generieren einer endgültigen Eingabeaufforderungsinformation (101-102, 201-203); und
Anzeigen, durch das Endgerät, der endgültigen Eingabeaufforderungsinformation (103, 204).

2. Verfahren nach Anspruch 1, wobei der Tag einen Tagnamen und einen Tagparameter umfasst, wobei der Tagname und der Tagparameter gemeinsam die entsprechende Endgeräteinformation bestimmen, die der Tag referenziert;
wobei der Tagname eine Art der Endgeräteinformation anzeigt, die der Tag referenziert; der Tagparameter eine bestimmte Endgeräteinformation anzeigt.

3. Verfahren nach Anspruch 2, wobei das Durchsuchen einer im Endgerät oder einem zweiten Server gespeicherten Endgeräteinformation nach der entsprechenden Endgeräteinformation, die der Tag referenziert, umfasst:
Durchsuchen, durch das Endgerät, einer Endgeräteinformation, die im Endgerät selbst gespeichert ist, oder der in einem zweiten Server gespeicherten nach einer Endgeräteinformation, die der Tag referenziert, in Übereinstimmung mit dem Tagnamen und dem Tagparameter des Tags (202).

4. Verfahren nach einem der Ansprüche 1 bis 3, wobei das Endgerät ein Endgerät in einem Sofortnachrichtenübermittlungssystem ist; der erste Server ein Server im Sofortnachrichtenübermittlungssystem ist.

5. Sofortnachrichtenübermittlungsendgerät, umfassend: ein Informationsempfangsmodul, ein Pars- und Kombinationsmodul und ein Informationsanzeigemodul; wobei das Informationsempfangsmodul (21) ausgelegt ist, eine ursprüngliche Eingabeaufforderungsinformation zu empfangen, wobei ein Abschnitt, der einer Endgeräteinformation in der ursprünglichen Eingabeaufforderungsinformation entspricht, durch einen Tag referenziert und ersetzt wird; wobei der Tag eine Endgeräteinformation eines Endgeräts referenziert und ersetzt;
das Pars- und Kombinationsmodul (22) ausgelegt ist, den Tag zu parsen, eine im Endgerät oder einem zweiten Server gespeicherte Endgeräteinformation nach der entsprechenden Endgeräteinformation, die der Tag referenziert, zu durchsuchen; den Tag in der ursprünglichen Eingabeaufforderungsinformation mit der entsprechenden Endgeräteinformation zu ersetzen und eine endgültige Eingabeaufforderungsinformation zu generieren;
das Informationsanzeigemodul (23) ausgelegt ist, die vom Pars- und Kombinationsmodul generierte endgültige Eingabeaufforderungsinformation anzuzeigen.

6. Endgerät nach Anspruch 5, ferner umfassend:
ein Datenspeichermodul (24), das eine Endgeräteinformation zu speichern hat.

7. Endgerät nach Anspruch 5, wobei der Tag einen Tagnamen und einen Tagparameter umfasst; wobei der Tagname und der Tagparameter gemeinsam eine Endgeräteinformation bestimmen, die der Tag referenziert;
wobei der Tagname eine Art der Endgeräteinformation anzeigt, die der Tag referenziert; der Tagparameter eine bestimmte Endgeräteinformation anzeigt.

8. Endgerät nach Anspruch 7, wobei das Pars- und Kombinationsmodul umfasst:
eine Parseinheit (221), um den Tag zu parsen;
eine Sucheinheit (222), um das Datenspeichermodul oder einen zweiten Server nach einer Endgeräteinformation zu durchsuchen, die der Tag referenziert;
eine Kombinationseinheit (223), um den Tag in der ursprünglichen Eingabeaufforderungsinformation mit der von der Sucheinheit (222) aufgefundenen Endgeräteinformation zu ersetzen und die endgültige Eingabeaufforderungsinformation zu generieren.

9. Sofortnachrichtenübermittlungssystem, umfassend: einen ersten Server (1) und ein Endgerät (2) nach einem der Ansprüche 5 bis 8;
wobei der erste Server (1) ausgelegt ist, eine ursprüngliche Eingabeaufforderungsinformation an das Endgerät (2) zu senden, wobei ein Abschnitt, der einer Endgeräteinformation in der ursprünglichen Eingabeaufforderungsinformation entspricht, durch einen Tag referenziert und ersetzt wird; wobei der Tag eine Endgeräteinformation eines Endgeräts referenziert und ersetzt;
einen zweiten Server (3), der ausgelegt ist, um eine Endgeräteinformation zu speichern;
wobei das Endgerät (2) ausgelegt ist, eine entsprechende Endgeräteinformation aus einer im Endgerät (2) gespeicherten Endgeräteinformation oder vom zweiten Server (3) zu erhalten und den Tag in der ursprünglichen Eingabeaufforderungsinformation mit der erhaltenen Endgeräteinformation zu ersetzen.

10. Computerprogrammprodukt, das Computerprogrammcode umfasst, der, wenn er von einer Computereinheit ausgeführt wird, bewirkt, dass die Computereinheit alle Schritte des Verfahrens nach einem der Ansprüche 1 bis 4 durchführt.

11. Computerlesbares Medium, wobei Computerprogrammcode nach Anspruch 10 auf dem computerlesbaren Medium gespeichert ist

## Revendications

1. Procédé de combinaison d'informations de messagerie instantanée, comprenant :
la réception, par un terminal, d'informations d'invite d'origine, dans lequel une partie correspondant aux informations de terminal dans les information d'invite d'origine est référencée et remplacée par une étiquette (100, 200) ;
l'étiquette fait référence aux informations de terminal d'un terminal et les remplace ;
l'analyse, par le terminal, de l'étiquette et la recherche des informations de terminal stockées dans le terminal ou dans un second serveur pour les informations de terminal correspondantes auxquelles l'étiquette fait référence ;
le remplacement par le terminal de l'étiquette dans les informations d'invite d'origine par les informations de terminal correspondantes, et la génération d'informations d'invite finales (101 et-102, 201 à 203) ; et
l'affichage, par le terminal, des informations d'invite finales (103, 204).

2. Procédé selon la revendication 1, dans lequel l'étiquette comprend un nom d'étiquette et un paramètre d'étiquette, le nom d'étiquette et le paramètre d'étiquette déterminent conjointement les informations de terminal correspondantes auxquelles l'étiquette fait référence ;
le nom de l'étiquette indique un type des informations de terminal auxquelles l'étiquette fait référence ; le paramètre d'étiquette indique des informations de terminal spécifiques.

3. Procédé selon la revendication 2, dans lequel la recherche d'informations de terminal stockées dans le terminal ou dans le second serveur pour des informations de terminal correspondantes auxquelles l'étiquette fait référence comprend :
la recherche, par le terminal, des informations de terminal stockées dans le terminal lui-même ou celles stockées dans un second serveur pour des informations de terminal auxquelles l'étiquette fait référence en fonction du nom de l'étiquette et du paramètre d'étiquette de l'étiquette (202).

4. Procédé selon l'une quelconque des revendications 1 à 3, dans lequel le terminal est un terminal dans un système de messagerie instantanée ; le premier serveur est un serveur du système de messagerie instantanée.

5. Terminal de messagerie instantanée, comprenant : un module de réception d'informations, un module d'analyse et de combinaison et un module d'affichage d'informations ; dans lequel
le module de réception d'informations (21) est adapté pour recevoir les informations d'invite d'origine, dans lequel
une partie correspondant aux informations de terminal dans les informations d'invite d'origine est référencée et remplacée par une étiquette ; l'étiquette fait référence à et remplace les informations de terminal d'un terminal ;
le module d'analyse et de combinaison (22) est adapté pour analyser l'étiquette, rechercher des informations stockées dans le terminal ou dans le second serveur pour des informations de terminal correspondantes auxquelles l'étiquette fait référence ; remplacer l'étiquette dans les informations d'invite d'origine par des informations de terminal correspondantes et générer des informations d'invite finales ;
le module d'affichage d'informations (23) est adapté pour afficher les informations d'invite finale générées par le module d'analyse et de combinaison.

6. Terminal selon la revendication 5, comprenant en outre :
un module de stockage de données (24), qui doit stocker des informations de terminal.

7. Terminal selon la revendication 5, dans lequel l'étiquette comprend un nom d'étiquette et un paramètre d'étiquette ; le nom d'étiquette et le paramètre d'étiquette déterminent conjointement des informations de terminal auxquelles l'étiquette fait référence ;
le nom de l'étiquette indique un type d'information de terminal auquel l'étiquette fait référence ; le paramètre d'étiquette indique des informations de terminal spécifiques.

8. Terminal selon la revendication 7, dans lequel le module d'analyse et de combinaison comprend :
une unité d'analyse (221) pour analyser l'étiquette ;
une unité de recherche (222), pour rechercher dans le module de stockage de données ou dans un second serveur des informations de terminal auxquelles l'étiquette fait référence ;
une unité de combinaison (223), pour remplacer l'étiquette dans les informations d'invite d'origine par les informations de terminal recherchées par l'unité de recherche (222) et générer les informations d'invite finales.

9. Système de messagerie instantanée, comprenant : un premier serveur (1) et un terminal (2) selon l'une quelconque des revendications 5 à 8.
le premier serveur (1) est adapté pour transmettre des informations d'invite d'origine au terminal (2) dans lequel
une partie correspondant aux informations de terminal dans les informations d'invite d'origine est référencée et remplacée par une étiquette ; l'étiquette fait référence aux informations de terminal d'un terminal et les remplace ;
un second serveur (3), adapté pour stocker des informations de terminal ; le terminal (2) adapté pour obtenir des informations de terminal correspondantes à partir des informations de terminal stockées dans le terminal (2), ou du second serveur (3) et remplace l'étiquette dans les informations d'invite d'origine par les informations de terminal obtenues.

10. Produit de programme informatique, comprenant un code de programme informatique, qui, lorsqu'il est exécuté par une unité informatique, fera exécuter par l'unité informatique toutes les étapes du procédé selon l'une quelconque des revendications 1 à 4.

11. Support lisible par ordinateur, dans lequel le code de programme informatique selon la revendication 10 est stocké sur le support lisible par ordinateur.
